Europäisches Patentamt

European Patent Office

Office européen des brevets

(11) Publication number: **0 363 479**
**A1**

(12) **EUROPEAN PATENT APPLICATION**
**published in accordance with Art.**
**158(3) EPC**

(21) Application number: **87904743.9**

(22) Date of filing: **21.07.87**

(86) International application number:
**PCT/JP87/00531**

(87) International publication number:
**WO 89/00596 (26.01.89 89/03)**

(51) Int. Cl.⁵: **C08L 23/26 , C08L 77/00 ,**
**C08L 9/06 , C08L 53/02 ,**
**C08L 51/06 , C08L 23/02**

(43) Date of publication of application:
**18.04.90 Bulletin 90/16**

(84) Designated Contracting States:
**AT BE CH DE FR GB IT LI NL SE**

(71) Applicant: **TOA NENRYO KOGYO KABUSHIKI**
**KAISHA**
**1-1 Hitotsubashi, 1-Chome Chiyoda-Ku**
**Tokyo 100(JP)**

(72) Inventor: **FUJITA, Yuji 4-3-321,**
**Nishitsurugaoka 1-chome**
**Ooi-machi, Iruma-gun**
**Saitama 354(JP)**
Inventor: **YAGI, Yukihiko 4-6, Nishitsurugaoka**
**1-chome**
**Ooi-machi, Iruma-gun**
**Saitama 354(JP)**
Inventor: **SAKUMA, Masato 17-12, Harigaya**
**2-chome**
**Urawa-shi**
**Saitama 338(JP)**
Inventor: **SAKAIZAWA, Masao 4-6,**
**Nishitsurugaoka 1-chome**
**Ooi-machi, Iruma-gun**
**Saitama 354(JP)**
Inventor: **KITANO, Kissho 4-2-225,**
**Nishitsurugaoka 1-chome**
**Ooi-machi, Iruma-gun**
**Saitama 354(JP)**
Inventor: **YAMAMOTO, Noboru 52-13-101,**
**Hayamiya 1-chome**
**Nerima-ku**
**Tokyo 176(JP)**

(74) Representative: **Holmes, Michael John et al**
**Frank B. Dehn & Co. Imperial House 15-19**
**Kingsway**
**London WC2B 6UZ(GB)**

EP 0 363 479 A1

(54) **THERMOPLASTIC RESIN COMPOSITION.**

(57) A thermoplastic resin composition which comprises 5 to 95 parts by weight of modified polyolefin (A) prepared by reacting a mixture of polyolefin and polyamide with an unsaturated carboxilic acid or its derivative; 5 to 95 parts by weight of polyamide (B) ; 0 to 90 parts by weight of polyolefin (C) (provided that (A) + (B) + (C) = 100 parts by weight); and 5 to 80 parts by weight of styrenic rubber (D). This thermoplastic resin composition is preferably used for producing moldings with excellent impact resistance and excellent surface luster.

## SPECIFICATION

## THERMOPLASTIC RESIN COMPOSITION

### Field of industrial application

The present invention relates to a thermoplastic resin composition, and more particularly it is concerned with a resin composition which is composed of a comodified product of polyolefin and polyamide, polyamide, polyolefin, and styrene rubber, and is superior in surface gloss and impact resistance.

### Prior art

Blending polypropylene and polyamide together is a known practice to improve on the mechanical strength, heat resistance, and dyeability of polypropylene, which is typical of crystalline polyolefin, and to reduce the water absorption of polyamide and avoid the deterioration of properties of polyamide caused by water absorption. However, a composition obtained by simple melt-mixing of polypropylene and polyamide has not the intended good properties because of their poor compatibility which leads to phase separation, low surface gloss, and unsatisfactory mechanical properties. To overcome this drawback, there has been proposed a method of performing the blending of polypropylene and polyamide in the presence of polypropylene modified with maleic anhydride.

However, the addition of modified polypropylene alone is not satisfactory for the improvement in physical properties such as impact resistance and surface properties. Thus, there has been proposed an alternative idea of incorporating a low-crystalline polymer or amorphous polymer modified with an unsaturated carboxylic acid anhydride. For example, there are disclosed a composition composed of polyamide and a modified product of a mixture composed of a crystalline polyolefin and a low-crystalline or amorphous ethylene-$\alpha$-olefin copolymer (Japanese Patent Laid-open No. 57-8246), a composition composed of modified polypropylene, polyamide, modified low-crystalline or amorphous ethylene-$\alpha$-olefin copolymer, and inorganic filler (Japanese Patent Laid-open No. 60-53550), and a composition composed of polypropylene, polyamide, and modified low-crystalline or amorphous propylene-$\alpha$-olefin copolymer (Japanese Patent Laid-Open No. 60-110740).

In the case of conventional compositions, the improvement in impact resistance is made by incorporating a low-crystalline or amorphous copolymer or an acid-modified product thereof. However, there is still a demand for compositions having further improved impact resistance and surface gloss.

## Disclosure of the invention

It is an object of the present invention to solve the problems involved in the conventional compositions, and to provide a composition composed of a polyolefin, polyamide, modified polyolefin, and low-crystalline copolymer, said composition being superior in surface gloss and mechanical properties, especially impact resistance.

The gist of the invention resides in an impact-resistant thermoplastic resin composition which comprises (A) 5-95 parts by weight of modified polyolefin formed by reacting a mixture of a polyolefin (preferably 10-95 wt%) and a polyamide (preferably 90-5 wt%) with an unsaturated carboxylic acid or a derivative thereof, (B) 5-95 parts by weight of polyamide, (C) 0-90 parts by weight of polyolefin [provided that the sum of (A), (B), and (C) is 100 parts by weight], and (D) 5-80 parts by weight of styrene rubber.

The polyolefin used in the invention includes homopolymers of $\alpha$-olefins such as ethylene, propylene, butene-1, pentene-1, hexene-1, and 4-methylpentene-1, copolymers of ethylene and $\alpha$-olefin, and copolymers of at least two of these $\alpha$-olefins. They are crystalline polymers. The copolymers include random copolymers and block copolymers. Two or more of these resins may be used in combination.

Preferable among the above-mentioned polyolefins are propylene-based ones such as polypropylene and random or block copolymers of propylene and ethylene or other $\alpha$-olefins.

The polyamide used for the modified polyolefin (A) in the invention is a polymeric compound having the acid amide (-CONH-) as the repeating unit. It is formed by (1) ring opening polymerization of lactam, (2) polycondensation of aminocarboxylic acid, or (3) polycondensation of a diamine and a dibasic acid. It has the generic name nylon such as nylon-6, nylon-12, nylon-9, nylon-11, nylon-66, and nylon-610. Preferable among them are nylon-6 and nylon-66. The molecular weight of the polyamide is not specifically restricted. However, the preferred polyamide has a molecular weight corresponding to a relative viscosity ($\eta_{rel}$) equal to or higher than 0.5, preferably equal to or higher than 2.0.

The modified polyolefin (A) in the invention is formed by grafting 0.001-10 wt%, preferably 0.1-5 wt%, of unsaturated carboxylic acid or derivative thereof to the above-mentioned mixture of polyolefin and polyamide. Examples of the unsaturated carboxylic acid or derivative thereof include acrylic acid, maleic acid, fumaric acid, tetrahydrophthalic acid, itaconic acid, citraconic acid, crotonic acid, isocrotonic acid, endobicyclo[2,2,1]-5-heptene-2,3-dicarboxylic acid, anhydrides thereof, and esters thereof.

The grafting of the unsaturated carboxylic acid or derivative thereof to the mixture of polyolefin and polyamide may be performed by any known method. According to some preferred methods, the grafting is accomplished by melt-kneading a polyolefin and an unsaturated carboxylic acid or a derivative thereof in the presence of an organic peroxide as an initiator, or by dissolving a polyolefin in a solvent and adding an unsaturated carboxylic acid or a derivative thereof and an initiator to the solution for reaction.

In this case, the mixing ratio of polyolefin and polyamide should be as concerns polyolefin preferably 10-95 wt%, more preferably 20-90 wt%, as concerns polyamide preferably 90-5 wt%, more preferably 80-10 wt%. With polyolefin less than 10 wt%, the resulting composition has a high water absorption and hence is poor in physical properties (such as elastic modulus) and compatibility. With polyolefin in excess of 95 wt%, the resulting composition is not preferable since it is also poor in compatibility and physical properties. The amount of an unsaturated carboxylic acid or a derivative thereof and an organic peroxide as an initiator should preferably be 0.001 to 5 parts by weight and 0.001 to 5 parts by weight, respectively, for 100 parts by weight of the mixture composed of polyolefin and polyamide. The melt-kneading should be performed by using a Banbury mixer or roll mill usually at 180-300°C at which all the components melt. In this way, there is obtained the modified polyolefin (A) in which polyamide is joined to polyolefin by grafting through an unsaturated carboxylic acid anhydride.

The polyamide (B) used in the invention is the same polyamide as used for the above-mentioned modified polyolefin (A). Also, the polyolefin (C) used in the invention is the same polyolefin as used for the above-mentioned modified polyolefin (A).

The styrene rubber (D) used in the invention is a random or block copolymer of styrene and butadiene or isoprene, such as styrene-butadiene rubber (SBR), styrene-butadiene-styrene block copolymer rubber (SBS), styrene-isoprene-styrene block copolymer rubber (SIS), styrene-ethylene-butylene-styrene block copolymer rubber (SEBS) formed by hydrogenation of SBS, and hydrogenated SIS. These styrene rubbers should preferably have a Mooney viscosity $ML_{1+4}$ (100°C) of 10 to 200 and contain 5-70 wt% of styrene. The styrene rubber effectively improves the impact resistance and surface gloss of the composition.

The composition of the invention has the formulation specified below.

(A)  modified polyolefin: 5-95 parts by weight, preferably 10-90 parts by weight.

(B)  polyamide: 5-95 parts by weight, preferably 10-90 parts by weight.

(C)  polyolefin: 0-90 parts by weight, preferably 0-80 parts by weight. [provided that the sum of (A), (B), and (C) is 100 parts by weight]. and

(D)  styrene rubber: 5-80 parts by weight, preferably 10-60 parts by weight.

The amount of the polyolefin units in the composition (which is the total of polyolefin in component (A) and polyolefin in component (C)) should be preferably 10-90 wt%, more preferably 20-80 wt%. With the modified polyolefin (A) less than 5 parts by weight, the composition is poor in compatibility, and with the modified polyolefin (A) more than 95 parts by weight, the composition is poor in mechanical properties and liable to coloration. The polyamide (B) in an amount less than 5 parts by weight is not sufficient to improve the stiffness, impact resistance, heat resistance, and gas barrier properties of the composition. Conversely, the polyamide (B) in an amount more than 95 parts by weight does not improve the water absorption and chemical resistance of the composition. If the amount of the styrene rubber is less than 5 parts by weight, the composition is poor in surface gloss and impact resistance. Conversely, if the amount of the styrene rubber is more than 80 parts by weight, the composition is poor in strength, stiffness, heat resistance, and surface hardness. The polyolefin units /when less than 10 wt% of the composition /are not sufficient to impart improved moisture resistance and chemical resistance to the composition, and the polyolefin units /when more than 90 wt% prevent the polyamide from improving the physical properties of the composition.

The composition of the invention can be produced by uniformly mixing the above-mentioned components (A) modified polyolefin, (B) polyamide, (C) polyolefin, and (D) styrene rubber according to the specified formulation and melt-kneading the thus obtained mixture. For example, the method in which all the components are preliminarily mixed by using a Henschel mixer, ribbon blender, tumbler blender, or the like, and the resulting mixture is melt-kneaded by using an extruder, Banbury mixer, roll mill, or the like at 180-300°C at which all the components melt, followed by pelletization or crushing, is preferable.

The composition of the invention may be incorporated with a heat stabilizer, UV light absorber, nucleating agent, antistatic agent, slip agent, flame retardant, coloring agent, inorganic filler, plasticizer, etc. within limits not deleterious to the object of the invention. These additives may be added at the time of or after the preparation of the composition.

## Best modes to conduct the invention

### Examples

The invention is now described in more detail with reference to the following examples, in which parts and % are based on weight. The test methods used in the examples are given below.

(1) MFR: JIS K7210 (load: 2.16 kg. at 230°C)

(2) Tensile strength and tensile elongation at break: ASTM D638

(3) Flexural modulus: JIS K7203

(4) Izod impact strength: ASTM D256 (-30°C), with notch

(5) Gloss: ASTM D 523

(6) Water absorption: Calculated from the difference of weight measured immediately after the molding of the test piece (in dry condition) and that measured after the immersion of the test piece in water at 50°C for 10 hours.

$$\text{Water absorption} = \frac{\begin{array}{c}\text{weight of test piece} \\ \text{measured after immersion}\end{array} - \begin{array}{c}\text{weight of test piece} \\ \text{measured after molding}\end{array}}{\text{weight of test piece measured after molding}} \times 100$$

Examples 1 to 12, Comparative Examples 1 to 7

### Preparation of modified polypropylene

The following components were mixed according to the formulation shown in Table 1.

Crystalline homopolypropylene (MFR = 3.5 g/10 min), abbreviated as homo PP.

Crystalline propylene-ethylene block copolymer (MFR = 3.0 g/10 min, ethylene content = 7%), abbreviated as block PP.

Nylon-6 (relative viscosity = 2.60), abbreviated as Ny6.

Nylon-66 (Maranyl A125, a product of ICI Ltd.), abbreviated as Ny66.

To 100 parts by weight of the mixture were added 0.3 parts of maleic anhydride (abbreviated as MA) or endobicyclo-[2.2.1]-5-heptene-2,3-dicarboxylic acid anhydride (abbreviated as HA), and 0.3 parts of organic peroxide (Percumyl H, a product of Nippon Oils and Fats Co., Ltd.), abbreviated as PO.

The components were preliminarily mixed at normal temperature using a Henschel mixer and then kneaded and pelletized at 220°C using a twin-screw extruder. The resulting modified homopolypropylene was found to contain 0.32% of acid added and to have an MFR of 9.5 g/10 min, and the resulting modified block polypropylene was found to contain 0.36% of acid added and to have an MFR of 8.2 g/10 min.

Preparation of composition

The following components were mixed according to the formulation shown in Table 1.

Modified homo PP.

Modified block PP.

Ny6.

Ny66.

Homo PP.

Block PP.

Styrene-ethylene-butylene block copolymer (Kraton G 1657, a
  product of Shell Chemical), having a solution viscosity of
  1100 cps. in 20% toluene solution at 25°C, abbreviated as
  SEBS.

Styrene-butadiene rubber (JSR 11778N, a product of Japan
  Synthetic Rubber Co., Ltd.), having a Mooney viscosity
  $ML_{1+4}$ (100°) of 46, abbreviated as SBR.

The components were preliminarily mixed at normal
temperature using a Henschel mixer and then kneaded and
pelletized at 250°C using a twin-screw extruder. The resulting
composition was made into test pieces by injection molding, and
the physical properties of the test pieces were measured. The
results are shown in Table 1.

For comparison, various kinds of compositions were prepared
as follows:

Comparative Example 1. Composition not containing the styrene
  rubber.

Comparative Examples 2 and 7. Compositions with the styrene
  rubber replaced by ethylene-propylene rubber (ethylene
  content = 70%, Mooney viscosity $ML_{1+4}$ (100°C) = 70,
  MFR = 0.6 g/10 min), abbreviated as EPR.

Comparative Examples 3 and 6. compositions containing the
  modified PP (A) in an amount less than 5%.

Comparative Example 4. Composition in which the modified PP
  (A) does not contain polyamide.

Comparative Example 5. Composition not containing the polyamide (B).

Table 1 shows the physical properties of the compositions. It is clear from Table 1 that the compositions are poor in mechanical properties, especially impact strength, and surface gloss.

EP 0 363 479 A1

Table 1

| Example No. | | | 1 | 2 | 3 | 4 | 5 | 6 | 7 | 8 | 9 | 10 | 11 | 12 |
|---|---|---|---|---|---|---|---|---|---|---|---|---|---|---|
| Modified PP (A), | PP (%) | | Homo PP 70 | Homo PP 70 | Homo PP 70 | Homo PP 70 | Homo PP 70 | Homo PP 70 | Homo PP 90 | Homo PP 70 | Homo PP 70 | Homo PP 70 | Homo PP 70 | Homo PP 70 |
| | Polyamide (%) | | Ny6 30 | Ny6 30 | Ny6 30 | Ny6 30 | Ny6 30 | Ny6 30 | Ny6 10 | Ny6 30 | Ny6 30 | Ny66 30 | Ny6 30 | Ny6 30 |
| | acid | | MA | MA | MA | MA | MA | MA | MA | MA | MA | MA | MA | MA |
| (parts) | | | 20 | 20 | 20 | 30 | 20 | 30 | 10 | 20 | 20 | 20 | 20 | 70 |
| Polyamide (B) (parts) | | | Ny6 30 | Ny6 30 | Ny6 30 | Ny6 40 | Ny6 10 | Ny6 70 | Ny6 50 | Ny6 30 | Ny6 30 | Ny66 30 | Ny6 30 | Ny6 30 |
| PP (C) (parts) | | | Homo PP 50 | Homo PP 50 | Homo PP 50 | Homo PP 30 | Homo PP 70 | — — | Homo PP 40 | Homo PP 50 | Homo PP 50 | Homo PP 50 | Block PP 50 | — — |
| Styrene rubber (D) (parts) | | | SEBS 10 | SEBS 30 | SEBS 50 | SEBS 30 | SEBS 10 | SEBS 10 | SEBS 30 | SBR 30 | SEBS 30 | SEBS 30 | SEBS 30 | SEBS 30 |
| PP units/composition(%) | | | 58 | 49 | 43 | 39 | 76 | 19 | 38 | 49 | 49 | 49 | 49 | 38 |
| MFR (g/10 min) | | | 6.8 | 4.9 | 4.5 | 8.9 | 3.9 | 12.9 | 9.8 | 4.0 | 6.2 | * | 5.4 | 10.2 |
| Tensile strength(kg/cm²) | | | 680 | 570 | 510 | 630 | 620 | 800 | 540 | 510 | 560 | 620 | 480 | 600 |
| Tensile elongation at break (%) | | | 28.0 | 32.9 | 54.3 | 27.7 | 14.7 | 23.5 | 30.9 | 19.8 | 30.1 | 15.0 | 41.5 | 25.4 |
| Flexural modulus(kg/cm²) | | | 16700 | 12000 | 9900 | 13400 | 11500 | 18900 | 11400 | 11100 | 12100 | 13000 | 11600 | 13200 |
| Izod impact strength at -30℃ (kg-cm/cm) | | | 7.8 | 13.9 | 32.4 | 7.8 | 6.9 | 12.1 | 24.0 | 9.8 | 12.4 | 16.1 | 23.6 | 6.7 |
| Gloss (%) | | | 76.2 | 76.8 | 72.8 | 79.4 | 80.0 | 73.9 | 80.1 | 70.8 | 77.0 | 68.7 | 74.5 | 79.0 |
| Water absorption (%) | | | 0.17 | 0.14 | 0.18 | 0.27 | 0.01 | 0.90 | 0.24 | 0.13 | 0.14 | 0.08 | 0.14 | 0.25 |

* unmeasurable at 230℃

Table 1 (continued)

| Comparative Example No. | | 1 | 2 | 3 | 4 | 5 | 6 | 7 |
|---|---|---|---|---|---|---|---|---|
| Modified PP (A), | PP (%) | Homo PP 70 | Homo PP 70 | Homo PP 70 | Homo PP 100 | Homo PP 70 | Homo PP 70 | Homo PP 70 |
| | Polyamide (%) | Ny6 30 | Ny6 30 | Ny6 30 | — — | Ny6 30 | Ny6 30 | Ny66 30 |
| | acid | MA | MA | MA | MA | MA | MA | MA |
| (parts) | | 20 | 20 | 2 | 20 | 50 | 2 | 20 |
| Polyamide (B) (parts) | | Ny6 30 | Ny6 30 | Ny6 98 | Ny6 30 | — — | Ny6 50 | Ny66 30 |
| PP (C) (parts) | | Homo PP 50 | Homo PP 50 | — — | Homo PP 50 | Homo PP 50 | Homo PP 48 | Homo PP 50 |
| Styrene rubber (D) (parts) | | — — | EPR 30 | SEBS 30 | SEBS 30 | SEBS 30 | SEBS 30 | EPR 30 |
| PP units/composition(%) | | 64 | 49 | 1.1 | 54 | 65 | 38 | 49 |
| MFR (g/10 min) | | 8.9 | 5.0 | 17.4 | 8.0 | 6.4 | 6.2 | * |
| Tensile strength(kg/$cm^2$) | | 680 | 540 | 600 | 510 | 400 | 350 | 590 |
| Tensile elongation at break (%) | | 22.0 | 40.0 | 14.3 | 13.3 | 5.1 | 4.1 | 16.6 |
| Flexural modulus(kg/$cm^2$) | | 18000 | 11800 | 14100 | 10300 | 7800 | 12000 | 12900 |
| Izod impact strength at -30°C (kg-cm/cm) | | 3.9 | 15.0 | 4.2 | 6.0 | 3.2 | 3.0 | 17.0 |
| Gloss (%) | | 69.1 | 66.9 | 61.1 | 58.6 | 78.9 | 41.5 | 60.6 |
| Water absorption (%) | | 0.30 | 0.13 | 2.0 | 0.24 | 0.11 | 0.30 | 0.08 |

* unmeasurable at 230°C

EP 0 363 479 A1

## Industrial availability

The composition of the present invention is improved over the conventional ones in compatibility of polyolefin with polyamide, mechanical strength, especially impact resistance, and surface gloss in molding products obtained by molding the composition. In addition, it has low water absorption and good moldability.

By virtue of the above-mentioned characteristic properties, the composition of the invention is suitable as an industrial resin material for automotive parts and household electric appliances which need high impact resistance.

## Claim

A thermoplastic resin composition which comprises (A) 5-95 parts by weight of modified polyolefin formed by reacting a mixture of a polyolefin and a polyamide with an unsaturated carboxylic acid or a derivative thereof, (B) 5-95 parts by weight of polyamide, (C) 0-90 parts by weight of polyolefin [provided that the sum of (A), (B), and (C) is 100 parts by weight], and (D) 5-80 parts by weight of styrene rubber.

# INTERNATIONAL SEARCH REPORT

International Application No   PCT/JP87/00531

**I. CLASSIFICATION OF SUBJECT MATTER** (if several classification symbols apply, indicate all) [3]

According to International Patent Classification (IPC) or to both National Classification and IPC

Int.Cl[4]   C08L23/26, 77/00, 9/06, 53/02, 51/06, 23/02

**II. FIELDS SEARCHED**

| Minimum Documentation Searched [+] | |
|---|---|
| Classification System | Classification Symbols |
| IPC | C08L23/00-23/36, C08L77/00-77/12, C08L51/06 |

Documentation Searched other than Minimum Documentation
to the Extent that such Documents are Included in the Fields Searched [5]

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| A | JP, A, 60-49018 (Ube Industries, Ltd.) 18 March 1985 (18. 03. 85) Claim (Family: none) | 1 |
| A | JP, A, 60-262853 (Mitsubishi Chemical Industries Ltd.) 26 December 1985 (26. 12. 85) Claim (Family: none) | 1 |

* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| August 7, 1987 (07. 08. 87) | August 24, 1987 (24. 08. 87) |
| International Searching Authority [1] | Signature of Authorized Officer [20] |
| Japanese Patent Office | |

Form PCT/ISA/210 (second sheet) (October 1977)